# EUROPÄISCHE PATENTSCHRIFT

(11) **EP 1 616 816 B1**
(45) Veröffentlichungstag und Bekanntmachung des Hinweises auf die Patenterteilung: **24.12.2008**
(21) Anmeldenummer: 05010123.7
(22) Anmeldetag: 10.05.2005
(51) Int. Cl.: F16N 31/00

(54) **Zusammenlegbarer Behälter**
Collapsible container
Recipient repliable

(30) Priorität: 06.07.2004 EP 04015864
(43) Veröffentlichungstag der Anmeldung: 18.01.2006
(73) Patentinhaber: Sager, Bruno, 6330 Cham (CH)
(72) Erfinder: Sager, Bruno, 6330 Cham (CH)
(74) Vertreter: Wagner, Wolfgang Heribert

(56) Entgegenhaltungen:
- EP-A- 0 962 690
- US-A- 5 090 588
- US-A- 5 316 175
- US-A1- 2003 029 873

## Beschreibung

### Technisches Gebiet

Die Erfindung betrifft einen flüssigkeitsdichten offenen Behälter, welcher z.B. bei Undichtigkeiten an Leitungen oder bei wartungs- und Reparaturarbeiten zum Auffangen von Oel usw. eingesetzt werden kann.

### Stand der Technik

Zum Zweck des Auffangens von Flüssigkeiten werden gewöhnlich Kübel oder Wannen aus festem Material, insbesondere Kunststoff oder Metall eingesetzt. Diese Gegenstände sind eher schwer und umständlich in der Handhabung und benötigen bei Lagerung und Transport viel Platz. Sie werden deshalb auch verhältnismässig leicht beschädigt.

### Darstellung der Erfindung

Der Erfindung liegt die Aufgabe zu Grunde, einen gattungsgemässen Behälter anzugeben, der zusammenlegbar ist, so dass er ausserhalb des Einsatzes wenig Platz benötigt.

Diese Aufgabe wird durch die Merkmale im Kennzeichen des Anspruchs 1 gelöst. Der erfindungsgemässe Behälter kann leicht klein zusammengelegt werden, sodass er bei Lagerung und Transport nur einen Bruchteil des Volumens aufweist, das er im Einsatz fassen kann. Er ist dadurch leicht zu transportieren und kann daher sehr vielseitig eingesetzt werden, ausser bei Undichtigkeiten von Leitungen und Wartungs- und Reparatureinsätzen z.B. bei Havarien, Dekontaminationsarbeiten bei Oel- und Chemieunfällen, zur vorübergehenden Lagerung von das Grundwasser gefährdenden Flüssigkeiten oder zum Transport von solche Flüssigkeiten enthaltenden Behältnissen, die nicht zuverlässig dicht sind. Ein zusätzlicher grosser Vorteil des erfindungsgemässen Behälters ist dabei der Umstand, dass er nicht starr, sondern je nach Ausbildung in Grundriss und Höhe mehr oder weniger variabel und an die Umstände des Einsatzes anpassbar ist.

### Kurze Beschreibung der Zeichnungen

Im folgenden wird die Erfindung anhand von Figuren, welche lediglich Ausführungsbeispiele darstellen, näher erläutert,
Es zeigen
- Fig. 1: in perspektivischer Ansicht schräg von oben einen erfindungsgemässen Behälter gemäss einer ersten Ausführungsform,
- Fig. 2: einen Schnitt durch eine Seitenwand und einen Teil des Bodens des Behälters nach Fig. 1,
- Fig. 3: einen Schnitt durch eine Seitenwand und einen Teil des Bodens des Behälters nach Fig. 1 gemäss einer abgewandelten Ausführungsform,
- Fig. 4: in perspektivischer Ansicht schräg von oben einen erfindungsgemässen Behälter gemäss einer zweiten Ausführungsform und
- Fig. 5: einen Schnitt durch eine Seitenwand und einen Teil des Bodens des Behälters nach Fig. 4,
- Fig. 6: einen Schnitt durch den Behälter nach Fig. 4 in zusammengelegtem Zustand und
- Fig. 7a-d: Draufsichten auf den Behälter nach Fig. 4 in verschiedenen Einsatzkonfigurationen.

### Wege zur Ausführung der Erfindung

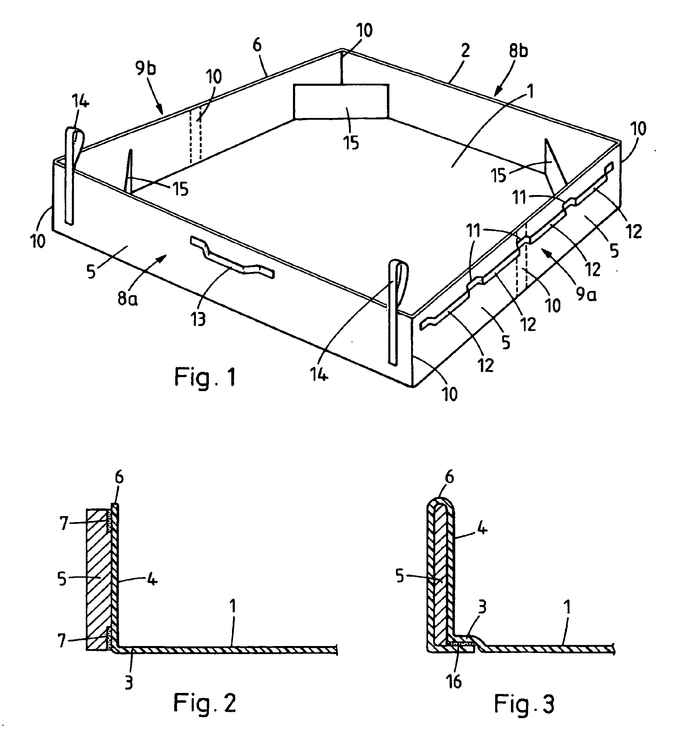

Der Behälter gemäss der in Fig. 1 und 2 dargestellten ersten Ausführungsform weist einen rechteckigen Boden 1 und eine mit konstanter Höhe umlaufende Seitenwand 2 auf, welche denselben umgibt. Die Innenseite des Behälters wird von einer Plane 3 gebildet, einem Gewebe, das beidseitig mit Kunststoff beschichtet ist. Die Plane 3 ist aus einem kreuzförmigen Netz hergestellt, das aus einem quadratischen Bodenabschnitt, das den Boden 1 bildet, und an dessen Seiten anschliessenden rechteckigen Seitenabschnitten 4 besteht, welche die Innenseiten der vier geraden Stücke der Seitenwand 2, die an die Seiten des Bodens 1 anschliessen, bilden. An den von den Ecken des Bodens 1 ausgehenden senkrechten Kanten sind die Seitenabschnitte 4 durch Schweissnähte flüssigkeitsdicht verbunden.

An der Aussenseite der Seitenabschnitte 4 sind starre rechteckige Wandteile 5 befestigt. Sie sind z.B. im unteren, an den Boden 1 anschliessenden Bereich und im oberen, an einen oeffnungsrand 6 anschliessenden Bereich jeweils durch einen doppelseitig klebenden Klebestreifen 7 oder durch Klebstoff mit den Seitenabschnitten 4 verklebt oder auch verschweisst.

Ueber Längswände 8a,b bildende den Längsseiten des Bodens 1 folgende Seitenwandabschnitte erstreckt sich jeweils ein einziger Wandteil 5, während die den Querseiten folgenden verbleibenden Seitenwandabschnitte Querwände 9a,b bilden, die jeweils zwei gleich grosse Wandteile 5 aufweisen, zwischen denen, in der Mitte jeder der Querwände 9a,b, jeweils ein Verbindungsstreifen 10 liegt, wo nur durch die Plane 3 eine zwar permanente, aber flexible Verbindung zwischen den benachbarten Wandteilen 5 hergestellt ist, gleich wie an den von den Ecken des Bodens 1 ausgehenden Kanten, an denen benachbarte Seitenwandabschnitte aneinanderstossen.

An den Querwänden 9a,b ist aussenseitig ein Gurt angebracht, welcher mehrere durch Befestigungsstellen 11 getrennte Halteschlaufen 12 zum Tragen und Ziehen des Behälters bildet, während an den Längswänden 8a,b aussenseitig Handgriffe 13 angebracht sind sowie an der Längswand 8a auch zwei über den Oeffnungsrand hinausragende Hebeschlaufen 14, an denen ein Hebezeug angreifen kann. Im Bereich der Kanten ist jeweils zur Stabilisierung ein Zugband 15 angebracht, welches die Innenseite der an sie anschliessenden Längswand 8a,b mit derjenigen der anschliessenden Querwand 9a,b straff verbindet.

Gemäss einer abgewandelten Ausführung (Fig. 3) sind die Seitenabschnitte 4 der Plane 3 etwas mehr als doppelt so lang ausgebildet und jeweils an der Innenseite des Wandteils 5 hochgezogen und an seiner Aussenseite hinunter- und unter demselben durchgezogen, wo sie dann durch eine Schweissnaht 16 mit der Unterseite des Bodenabschnitts verbunden sind. An den Verbindungsstreifen 10 ist jeweils die äussere und die innere Schicht des jeweiligen Seitenabschnitts 4 der Plane 3 ebenfalls durch eine Schweissnaht oder durch zwei parallele Schweissnähte verbunden, durch welche säcke abgeteilt sind, deren jeder einen der wandteile 5 ziemlich eng umschliesst, sodass die Wandteile 5 auch hier mit dem jeweiligen Seitenabschnitt 4 der Plane 3 fest und im wesentlichen unverschiebbar verbunden sind.

Der Behälter kann zusammengelegt werden, indem die Querwände 9a,b an den Verbindungsstreifen 10 abgeknickt und nach innen geschoben werden. Der flexible Boden 1 wird gleichzeitig gefaltet.

Die Grundfläche des Behälters ist vorzugsweise allgemein rechteckig oder quadratisch mit Seitenlängen von z.B. zwischen 40cm und 500cm, seine Höhe kann etwa zwischen 15cm und 40cm liegen. Die Wandabschnitte 5 können als Hohlstegplatten aus Kunststoff oder Metall ausgebildet sein oder als Platten aus geschäumtem Kunststoff oder Aluminium oder auch als Holzschichtplatten. Ihre Dicke kann je nach Grösse und Anforderungen zwischen einigen Millimetern und einigen Zentimetern liegen. Das Grundgewebe der Plane 3 ist vorzugsweise ein Polyestergewebe und kann z.B. mit PVC, PU, PE oder Alcryn beschichtet sein.

Es können ausserdem mehr als sechs Wandteile vorgesehen sein. Vor allem bei grösseren Behältern empfiehlt es sich, eine grössere Zahl von Wandteilen vorzusehen, damit der Behälter genügend klein zusammengelegt werden kann. Der Boden kann auch mehrlagig ausgebildet sein, z.B. unterhalb der Plane Verschleissschichten aufweisen. Im Boden oder in einer der seitenwände können Anschlüsse zum Füllen und Leeren des Behälters vorgesehen sein. Ausserdem kann ein separater Deckel zum Schliessen des Behälters vorhanden sein, der auch dessen Formstabilität erhöht und vor allem beim Transport des teilweise mit Flüssigkeit gefüllten Behälters nützlich sein kann. An der Aussenseite können Taschen angebracht sein, in denen Zubehör wie eine Handpumpe, Faltbehälter usw. untergebacht ist.

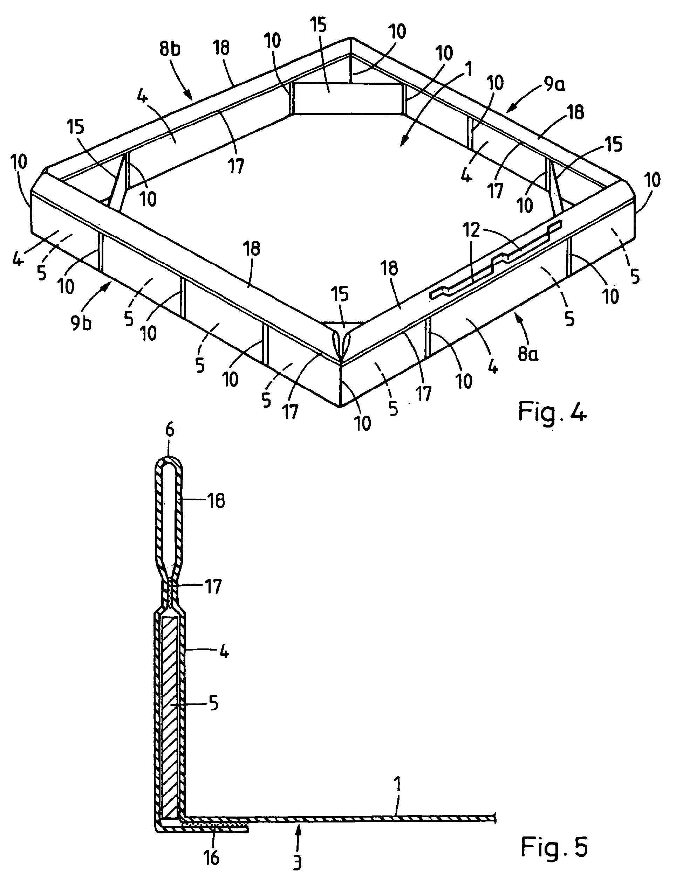

Der ungefähr quadratische Behälter gemäss der in Fig. 4, 5 dargestellten zweiten Ausführungsform entspricht im wesentlichen dem oben beschriebenen Behälter nach der abgewandelten ersten Ausführungsform. Er weist jedoch vierzehn Wandteile 5 - je drei aufeinanderfolgende Wandteile an den Längswänden 8a,b und je vier an den Querwänden 9a,b - auf. Besonders günstig ist es, wenn die vier Wandteile 5 der Querwände 9a,b längs des Randes des Bodens 1 jeweils die gleiche einer Einheitslänge entsprechende Länge aufweisen, während von den Wandteilen der Längswände 9a,b die Längen zweier seitlicher, an die Kanten anschliessender Wandteile 5 ebenfalls der Einheitslänge entsprechen und ein mittlerer Wandteil 5 etwa die doppelte Einheitslänge aufweist.

Die Wandteile 5 erstrecken sich nur bis zu einer auf gleichbleibender Höhe umlaufenden Obergrenze, die um etwa ein Drittel des Abstandes zwischen dem Boden 1 und dem Oeffnungsrand 6 unterhalb des letzteren liegt und an der der äussere und der innere Teil des Seitenabschnittes 4 der Plane 3 jeweils durch eine waagrechte umlaufende Schweissnaht 17 verbunden sind. Der Teil der Seitenwand 2, der oberhalb der oben erwähnten Obergrenze, d.h. oberhalb der Wandteile 5 liegt, wird lediglich durch die erwähnten Teile der Plane 3 gebildet.

Die den Seiten des Bodens 1 folgenden Seitenwandteile sind jeweils oberhalb der Obergrenze leicht trapezförmig geschnitten, d.h. sie werden gegen den Oeffnungsrand 6 hin etwas kürzer, sodass sie Seitenwand leicht nach innen geneigt ist. Dies hat vor allem den Vorteil, dass im Behälter aufgefangene Flüssigkeit, wenn der Behälter bewegt wird, weniger leicht über den Oeffnungsrand 6 schwappt. An den Längswänden 8a,b bildet der Seitenabschnitt 4 jeweils einen an den Enden offenen, sich über die ganze Länge der jeweiligen Längswand 8a;b erstreckenden Hohlsaum 18, durch welchen z.B. jeweils eine Tragstange geschoben werden kann, sodass der Behälter leicht von zwei oder vier Personen getragen werden kann.

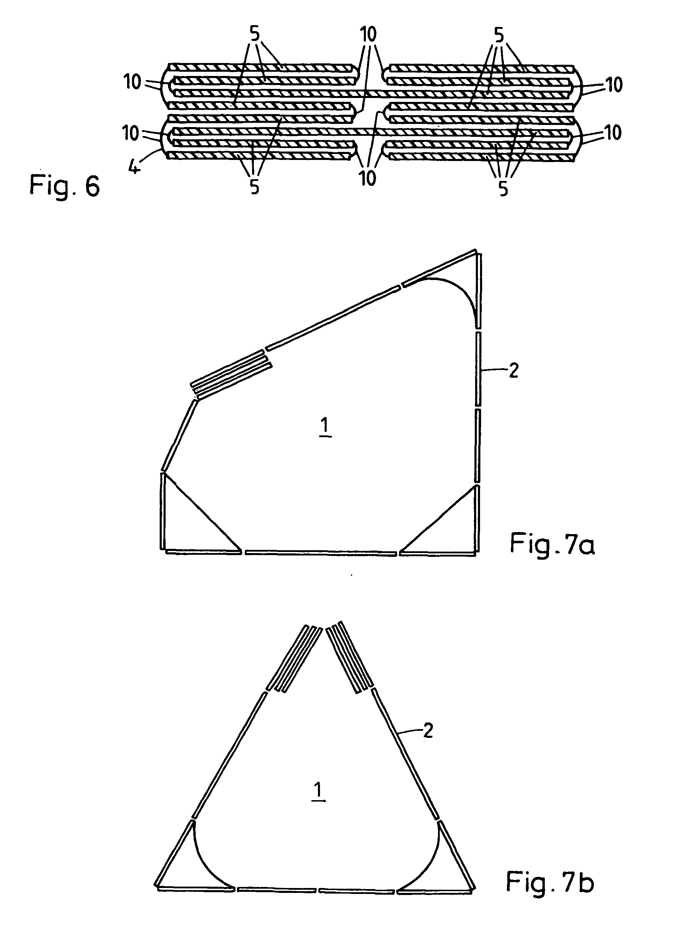

Dank der oben beschriebenen Anordnung und Ausbildung der Wandteile 5 kann die Seitenwand 2 wie in Fig. 6 dargestellt sehr eng gefaltet werden, so dass der Behälter bei Transport und Lagerung sehr wenig Platz benötigt. Ausserdem ist die so gebildete Konfiguration mechanisch sehr stabil.

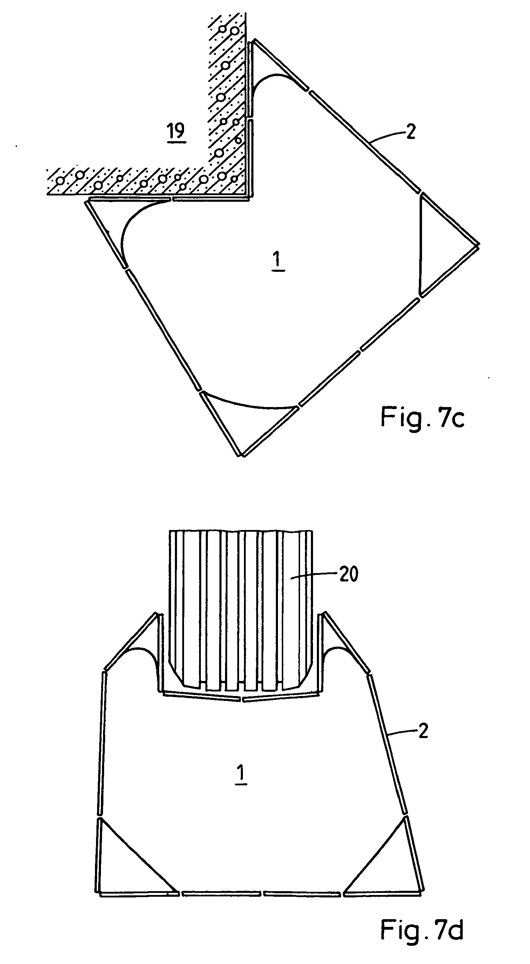

Ein weiterer Vorteil liegt darin, dass der Grundriss des Behälters sehr variabel ist und gut an besondere Anforderungen des jeweiligen Einsatzes angepasst werden kann. Dadurch kann er auch auf engem Raum und zwischen Hindernissen eingesetzt werden. Fig. 7a-d zeigen einige Beispiele. In der in Fig. 7a dargestellten Konfiguration ist durch eine Z-förmige Einfaltung von jeweils einen Wandteil 5 umfassenden Teilen der Seitenwand 2 eine der Ecken abgeschnitten, in Fig. 7b weist der Behälter dank zwei Z-förmigen Einfaltungen einen dreieckigen Grundriss auf. Gemäss Fig. 7c weist ein Seitenwandabschnitt einen V-förmigen Einsprung auf, der eine Aussenecke 19 eines Gebäudes aufnimmt, während gemäss Fig. 7d ein U-förmiger Einsprung Platz für einen Reifen 20 eines Fahrzeugs lässt.

Daneben ist der Behälter durch die flexible Ausbildung des oberen Teils der Seitenwand 2 und durch die Möglichkeit, Seitenwandabschnitte ganz oder teilweise etwas nach innen oder auch nach aussen zu kippen, auch in der Höhe beschränkt anpassbar, sodass er auch unter Umständen eingesetzt werden kann, wo, wie etwa unter Fahrzeugen, der Raum in der Höhe sehr beschränkt ist, ohne dass seine Aufnahmekapazität unter Normalbedingungen dadurch beeinträchtigt wäre.

Es sind dennoch auch andere Ausbildungen des Behälters möglich und u.U. sinnvoll. So kann der Boden auch dreieckig oder sechseckig ausgebildet sein. Wichtig ist, dass Freiheitsgrade vorhanden sind, die ein Zusammenfalten des Behälters gestatten, z.B. bei einer dreieckigen Konfiguration mindestens ein Seitenwandabschnitt einen vorzugsweise mittigen Verbindungsstreifen aufweist, an dem zwei Wandteile des Seitenwandabschnitts gegeneinander verdreht werden können.

### Bezugszeichenliste

- 1: Boden
- 2.: Seitenwand
- 3: Plane
- 4: Seitenabschnitt
- 5: Wandteil
- 6: Oeffnungsrand
- 7: Klebestreifen
- 8a,b: Längswände
- 9a,b: Querwände
- 10: Verbindungsstreifen
- 11: Befestigungsstelle
- 12: Halteschlaufe
- 13: Handgriff
- 14: Hebeschlaufe
- 15: Zugband
- 15: Schweissnaht
- 17: Schweissnaht
- 18: Hohlsaum
- 19: Aussenecke
- 20: Reifen

## Patentansprüche

1. Behälter mit einem Boden (1) von der Form eines Vielecks und einer Seitenwand (2), welche vom Rand des Bodens (1) zu einem oberhalb desselben umlaufenden, eine Oeffnung umgebenden Oeffnungsrand (6) reicht,
**dadurch gekennzeichnet, dass** der Boden (1) flexibel ist und die Seitenwand (2) mehrere starre, in Umfangsrichtung aneinander anschliessende ebene Wandteile (5) umfasst, welche an senkrechten Verbindungsstreifen (10), die mindestens von den Ecken des Bodens (1) ausgehen, flexibel verbunden sind und sich jeweils vom Rand des Bodens (1) mindestens über einen Teil der Höhe der Seitenwand (2) erstrecken, während die Innenseite des Behälters von einer flüssigkeitsdichten flexiblen Plane (3) gebildet wird, die einen Bodenabschnitt umfasst und an die Seiten desselben anschliessende Seitenabschnitte (4), mit deren jedem mindestens ein Wandteil (5) im wesentlichen unverschieblich verbunden ist.

2. Behälter nach Anspruch 1, **dadurch gekennzeichnet, dass** der Boden (1) lediglich vom Bodenabschnitt der Plane (3) gebildet wird.

3. Behälter nach Anspruch 1 oder 2, **dadurch gekennzeichnet, dass** die Wandteile (5) rechteckig sind.

4. Behälter nach Anspruch 3, **dadurch gekennzeichnet, dass** der Boden (1) rechteckig ist und mindestens zwei gegenüberliegende, jeweils einer Seite des Bodens (1) folgende Seitenwandabschnitte der Seitenwand (2) jeweils mindestens zwei längs der Seite aufeinanderfolgende Wandteile (5) umfassen.

5. Behälter nach Anspruch 4, **dadurch gekennzeichnet, dass** zwei einander gegenüberliegende Seitenwandabschnitte jeweils drei Wandteile (5) und die zwei verbleibenden einander gegenüberliegenden Seitenwandabschnitte jeweils vier Wandteile (5) aufweisen.

6. Behälter nach Anspruch 5, **dadurch gekennzeichnet, dass** der Boden im wesentlichen quadratisch ist und die vier Wandteile (5) eines Seitenwandabschnitts jeweils eine Einheitslänge aufweisen und von den drei Wandteilen (5) eines Seitenwandabschnitts jeweils zwei seitliche Wandteile (5) ebenfalls die Einheitslänge aufweisen und ein mittlerer Wandteil (5) die doppelte Einheitslänge.

7. Behälter nach einem der Ansprüche 1 bis 6, **dadurch gekennzeichnet, dass** die Wandteile (5) mit einer Aussenseite eines Seitenabschnitts (4) der Plane (3) fest verbunden, vorzugsweise verklebt sind.

8. Behälter nach einem der Ansprüche 1 bis 7, **dadurch gekennzeichnet, dass** dass jeder Wandteil (5) von einem von einem Seitenabschnitt (4) der Plane (3) gebildeten Sack eng umgeben ist.

9. Behälter nach Anspruch 8, **dadurch gekennzeichnet, dass** jeder Sack durch Verbindungsstreifen (10) folgende Nähte und eine Naht, welche den Seitenabschnitt (4) der Plane (3) mit der Unterseite des Bodenabschnitts derselben verbindet, begrenzt ist.

10. Behälter nach einem der Ansprüche 1 bis 9, **dadurch gekennzeichnet, dass** die Wandteile (5) jeweils bis zu einer mit Abstand unterhalb des Oeffnungsrandes (6) umlaufenden Obergrenze reichen, während die Seitenwand (2) zwischen derselben und dem Oeffnungsrand (6) lediglich von den Seitenabschnitten (4) der Plane (3) gebildet wird.

11. Behälter nach Anspruch 10, **dadurch gekennzeichnet, dass** sich die Seitenwand (2) von der Obergrenze der Wandteile (5) zum Oeffnungsrand (6) hin leicht verkürzt, sodass der oberhalb der Obergrenze liegende Teil der Seitenwand (2) etwas nach innen geneigt ist.

12. Behälter nach Anspruch 10 oder 11, **dadurch gekennzeichnet, dass** an mindestens zwei geraden Abschnitten des Oeffnungsrandes (6) der Seitenabschnitt (4) der Plane (3) jeweils einen an den Enden offenen Hohlsaum (18) bildet.

13. Behälter nach einem der Ansprüche 1 bis 12, **dadurch gekennzeichnet, dass** die Wandteile (5) jeweils als Platten ausgebildet sind, insbesondere als Hohlstegplatten aus Kunststoff oder Aluminium, oder als Platten aus geschäumtem Kunststoff oder Aluminiumschaum oder als Holzschichtplatten.

14. Behälter nach einem der Ansprüche 1 bis 13, **dadurch gekennzeichnet, dass** die Plane (3) als mit Kunststoff, insbesondere PVC, PU, PE oder Alcryn beschichtetes Gewebe, insbesondere Polyestergewebe ausgebildet ist.

## Claims

1. Container comprising a base (1) of polygonal shape and a side wall (2) which reaches from the edge of the base (1) to an opening edge (6) which encircles thereabove and surrounds an opening, **characterized in that** the base (1) is flexible and the side wall (2) comprises a plurality of rigid planar wall parts (5) which adjoin one another in the circumferential direction, are flexibly connected at perpendicular connecting strips (10) emanating at least from the corners of the base (1) and each extend from the edge of the base (1) at least over a portion of the height of the side wall (2), whereas the inside of the container is formed by a liquid-tight flexible tarpaulin (3) comprising a base portion and side portions (4) which adjoin the sides of the base portion and to each of which at least one wall part (5) is substantially non-displaceably connected.

2. Container according to claim 1, **characterized in that** the base (1) is formed merely by the base portion of the tarpaulin (3).

3. Container according to claim 1 or 2, **characterized in that** the wall parts (5) are rectangular.

4. Container according to claim 3, **characterized in that** the base (1) is rectangular and at least two opposing side wall portions, each following a side of the base (1), of the side wall (2) each comprise at least two wall parts (5) in succession along the side.

5. Container according to claim 4, **characterized in that** two opposing side wall portions each have three wall parts (5) and the two remaining opposing side wall portions each have four wall parts (5).

6. Container according to claim 5, **characterized in that** the base is substantially square and the four wall parts (5) of a side wall portion each have a standard length and, of the three wall parts (5) of a side wall portion, two respective lateral wall parts (5) likewise have the standard length and a central wall part (5) has twice the standard length.

7. Container according to any one of claims 1 to 6, **characterized in that** the wall parts (5) are rigidly connected, preferably adhered, to an outside of a side portion (4) of the tarpaulin (3).

8. Container according to any one of claims 1 to 7, **characterized in that** each wall part (5) is closely surrounded by a bag formed by a side portion (4) of the tarpaulin (3).

9. Container according to claim 8, **characterized in that** each bag is delimited by seams following connecting strips (10) and a seam connecting the side portion (4) of the tarpaulin (3) to the underside of the base portion thereof.

10. Container according to any one of claims 1 to 9, **characterized in that** the wall parts (5) each reach up to an upper limit encircling at a distance below the opening edge (6), whereas the side wall (2) between the upper limit and the opening edge (6) is formed merely by the side portions (4) of the tarpaulin (3).

11. Container according to claim 10, **characterized in that** the side wall (2) shortens slightly from the upper limit of the wall parts (5) to the opening edge (6), so that the part of the side wall (2) that is located above the upper limit is somewhat inwardly inclined.

12. Container according to claim 10 or 11, **characterized in that** on at least two straight portions of the opening edge (6) the side portion (4) of the tarpaulin (3) forms a respective hemstitch (18) which is open at the ends.

13. Container according to any one of claims 1 to 12, **characterized in that** the wall parts (5) are each configured as sheets, in particular as hollow web sheets made of plastics material or aluminium, or sheets made of foamed plastics material or aluminium foam or as wooden layer sheets.

14. Container according to any one of claims 1 to 13, **characterized in that** the tarpaulin (3) is configured as a fabric, in particular a polyester fabric, coated with plastics material, in particular PVC, polyurethane, polyethylene or Alcryn.

## Revendications

1. Récipient avec un fond (1) de la forme d'un polygone et une paroi latérale (2), qui va du bord du fond (1) jusqu'à un bord d'ouverture (6) faisant le tour au-dessus de celui-ci, entourant une ouverture, **caractérisé en ce que** le fond (1) est souple et la paroi latérale (2) comprend plusieurs parties de paroi (5) rigides, planes, adjacentes les unes aux autres dans la direction périphérique, qui sont reliées de manière souple au niveau de bandes de liaison (10) verticales qui partent au moins des angles du fond (1) et qui s'étendent chacune à partir du bord du fond (1) au moins sur une partie de la hauteur de la paroi latérale (2), tandis que la face intérieure du récipient est formée par une bâche (3) souple étanche aux liquides qui comprend une portion de fond et des portions latérales (4) adjacentes aux côtés de celui-ci à chacune desquelles au moins une partie de paroi (5) est reliée essentiellement de manière à ne pas pouvoir être déplacée.

2. Récipient selon la revendication 1, **caractérisé en ce que** le fond (1) est formé simplement par la portion de fond de la bâche (3).

3. Récipient selon la revendication 1 ou 2, **caractérisé en ce que** les parties de paroi (5) sont rectangulaires.

4. Récipient selon la revendication 3, **caractérisé en ce que** le fond (1) est rectangulaire et au moins deux portions de paroi latérale opposées de la paroi latérale (2), suivant chacune un côté du fond (1), comprennent chacune au moins deux parties de paroi (5) se suivant le long du côté.

5. Récipient selon la revendication 4, **caractérisé en ce que** deux portions de paroi latérale opposées l'une à l'autre présentent chacune trois parties de paroi (5) et les deux portions de paroi latérale restantes opposées l'une à l'autre présentent chacune quatre parties de paroi (5).

6. Récipient selon la revendication 5, **caractérisé en ce que** le fond est essentiellement carré et les quatre parties de paroi (5) d'une portion de paroi latérale présentent chacune une longueur unitaire et, parmi les trois parties de paroi (5) d'une portion de paroi latérale, deux parties de paroi (5) latérales présentent chacune également la longueur unitaire et une partie de paroi centrale (5) présente le double de la longueur unitaire.

7. Récipient selon l'une des revendications 1 à 6, **caractérisé en ce que** les parties de paroi (5) sont reliées de manière fixe à une face extérieure d'une portion latérale (4) de la bâche (3), de préférence collées.

8. Récipient selon l'une des revendications 1 à 7, **caractérisé en ce que** chaque partie de paroi (5) est entourée étroitement par un sac formé par une portion latérale (4) de la bâche (3).

9. Récipient selon la revendication 8, **caractérisé en ce que** chaque sac est limité par des coutures suivant des bandes de liaison (10) et une couture qui relie la portion latérale (4) de la bâche (3) à la face inférieure de la portion de fond de celle-ci.

10. Récipient selon l'une des revendications 1 à 9, **caractérisé en ce que** les parties de paroi (5) vont chacune jusqu'à une limite supérieure faisant le tour à distance au-dessous du bord d'ouverture (6), tandis que la paroi latérale (2) est formée, entre celle-ci et le bord d'ouverture (6), simplement par les portions latérales (4) de la bâche (3).

11. Récipient selon la revendication 10, **caractérisé en ce que** la paroi latérale (2) se raccourcit légèrement en allant de la limite supérieure des parties de paroi (5) au bord d'ouverture (6), de telle sorte que la partie de la paroi latérale (2) située au-dessus de la limite supérieure est quelque peu inclinée vers l'intérieur.

12. Récipient selon l'une des revendications 10 ou 11, **caractérisé en ce que,** sur au moins deux portions droites du bord d'ouverture (6), la portion latérale (4) de la bâche (3) forme respectivement une bordure creuse (18) ouverte aux extrémités.

13. Récipient selon l'une des revendications 1 à 12, **caractérisé en ce que** les parties de paroi (5) sont réalisées chacune sous la forme de plaques, en particulier de plaques à nervures creuses en matière plastique ou en aluminium, ou de plaques en matière plastique expansée ou en mousse d'aluminium ou de plaques de bois lamellé-collé.

14. Récipient selon l'une des revendications 1 à 13, **caractérisé en ce que** la bâche (3) est réalisée sous la forme de textile, en particulier de textile polyester, enduit de matière plastique, en particulier de PVC, PU, PE ou alcryn.
